# EUROPEAN PATENT APPLICATION

(11) **EP 4 826 806 A1**
(43) Date of publication of application: **21.10.2026**
(21) Application number: 24903825.8
(22) Date of filing: 29.03.2024
(51) Int. Cl.: H01M 4/66, H01M 4/62, H01M 10/052, H01M 4/02

(54) **NEGATIVE ELECTRODE FOR ALL SOLID-STATE BATTERY AND ALL SOLID-STATE BATTERY INCLUDING SAME**

(30) Priority: 15.12.2023 KR 20230183527
(71) Applicant: SAMSUNG SDI CO., LTD., Yongin-si, Gyeonggi-do 17084 (KR); IUCF-HYU (Industry-University Cooperation Foundation Hanyang University), Seoul 04763 (KR)
(72) Inventor: SHIN, Hyuksoo, Yongin-si, Gyeonggi-do 17084 (KR); LEE, Jungho, Yongin-si, Gyeonggi-do 17084 (KR); KIM, Wonjung, Yongin-si, Gyeonggi-do 17084 (KR); SOHN, Juhee, Yongin-si, Gyeonggi-do 17084 (KR); PARK, Seungman, Yongin-si, Gyeonggi-do 17084 (KR); YANG, Jinhoon, Yongin-si, Gyeonggi-do 17084 (KR); KIM, Yunsik, Yongin-si, Gyeonggi-do 17084 (KR); NAH, Jaehou, Yongin-si, Gyeonggi-do 17084 (KR); LEE, Yun Jung, Seoul 06000 (KR); JUN, Dayoung, Seoul 02560 (KR); JUNG, Ji Eun, Seoul 02550 (KR)
(74) Representative: Michalski Hüttermann & Partner mbB
(86) International application number: PCT/KR2024/004116
(87) International publication number: WO 2025/127252

(57) **Abstract**

The present invention relates to a negative electrode for an all solid-state battery and an all solid-state battery including same, the negative electrode comprising: a current collector, a first layer which is positioned on the current collector and is composed of an oxide of a metal that can be alloyed with lithium and a first binder; and a second layer which is positioned on the first layer and is composed of a carbon-based material and a second binder.

## Description

### TECHNICAL FIELD

A negative electrode for an all solid-state battery and an all solid-state battery including are disclosed.

### BACKGROUND ART

Recently, rapid development has been made for electronic devices using batteries, such as mobile phones, laptop computers, and electric vehicles.

Development of an all solid-state battery utilizing lithium metal as a negative electrode is underway for such batteries. An all solid-state battery refers to a battery in which all materials are composed of solids, and particularly refers to a battery using a solid electrolyte. Since the electrolyte is solid, the all solid-state battery is structurally rigid, and thus the risk of fire or explosion due to leakage caused by an external impact or the like is low. In addition, the battery may be formed into various shapes.

### DETAILED DESCRIPTION OF THE INVENTION

### TECHNICAL PROBLEM

One embodiment provides a negative electrode for an all solid-state battery that exhibits superior electrochemical properties and is cost-effective.

Another embodiment provides an all solid-state battery including the negative electrode.

### TECHNICAL SOLUTION

One embodiment provides a negative electrode for an all solid-state battery including a current collector; a first layer positioned on the current collector and is composed of an oxide of a metal capable of alloying with lithium and a first binder; and a second layer positioned on the first layer and is composed of a carbon-based material and a second binder.

Another embodiment provides an all solid-state battery including the negative electrode, a positive electrode, and a solid electrolyte positioned between the negative electrode and the positive electrode.

### ADVANTAGEOUS EFFECTS

A negative electrode for an all solid-state battery according to one embodiment exhibits excellent electrochemical properties and is economical.

### DESCRIPTION OF THE DRAWINGS

FIG. 1 is a schematic view illustrating a negative electrode for an all solid-state battery according to one embodiment.
FIG. 2 is a cross-sectional view schematically showing an all solid-state battery according to one embodiment.
FIG. 3 is a cross-sectional SEM image of a negative electrode and a solid electrolyte layer according to Example 1.
FIG. 4 is a cross-sectional SEM image of a negative electrode and a solid electrolyte layer according to Comparative Example 1.
FIG. 5 is a cross-sectional SEM image of a negative electrode and a solid electrolyte layer according to Comparative Example 2.
FIG. 6 is a graph showing Coulombic efficiency of half cells according to Example 1 and Comparative Examples 1 and 2.

### BEST MODE FOR PERFORMING INVENTION

Hereinafter, embodiments of the present invention will be described in detail. However, these are provided as embodiments, and the present invention is not limited thereby and the disclosure is only defined by the scope of the claims described later.

Terms used herein are used to explain exemplary embodiments, but are not intended to limit the present invention. Expressions in the singular include expressions in plural unless the context clearly dictates otherwise.

The term "combination thereof" may include a mixture, a laminate, a complex, a copolymer, an alloy, a blend, a reactant of constituents.

The terms "comprise", "include" or "have" are intended to designate the presence of stated features, numbers, steps, components, or a combination thereof, and should be understood not to preclude the possibility of the presence or addition of one or more other features, numbers, steps, components, or combinations.

Throughout the specification, unless explicitly described to the contrary, the word "comprise" and variations such as "comprises" or "comprising" will be understood to imply the inclusion of stated elements but not the exclusion of any other element.

Furthermore, the terms "about" and "substantially" used throughout the present specification are intended to mean a value at or near the stated value, accounting for inherent preparation and material tolerances, and these terms are used to facilitate understanding of the present invention and to prevent unscrupulous infringers from unfairly exploiting the disclosure in which accurate or absolute values are stated.

Throughout the specification, "A and/or B" indicates "A or B, or both A and B".

Unless otherwise defined in the specification, it will be understood that when an element, such as a layer, a film, a region, a plate, and the like is referred to as being "on" or "over" another element, it may be directly on, connected to, or coupled to the other element or layer, or one or more intervening elements may be present.

In the present invention, "particle size" or "a particle diameter", may be an average particle diameter. In addition, the average particle diameter may be defined as an average particle diameter (D50) indicating the diameter of particles at the 50 % cumulative volume point of a cumulative size-distribution curve. The particle diameter may be measured by a method well known to those skilled in the art, for example, by a particle size analyzer, or by a transmission electron microscope, a scanning electron microscope, or a field emission scanning electron microscopy (FE-SEM). In another embodiment, the particle diameter may be determined by using a dynamic light-scattering measurement device, followed by data analysis to count the number of particles for each particle size range and calculate the average particle diameter (D50), or the particle diameter may be measured using a laser diffraction method. More specifically, if measuring via the laser diffraction method, the particles to be measured are dispersed in a dispersion medium and introduced into a commercially available laser diffraction particle size analyzer (e.g., MT 3000 available from Microtrac, Inc.), followed by the irradiation of ultrasonic waves of approximately 28 kHz at an output power of 60 W to calculate the average particle diameter (D50) at the cumulative 50 % of the particle size distribution in the measuring device.

The term "thickness" may be measured, for example, through a photograph taken with an optical microscope such as a scanning electron microscope.

A negative electrode for an all solid-state battery according to one embodiment includes a current collector; a first layer positioned on the current collector and is composed of an oxide of a metal capable of alloying with lithium and a first binder; and a second layer positioned on the first layer and is composed of a carbon-based material and a second binder.

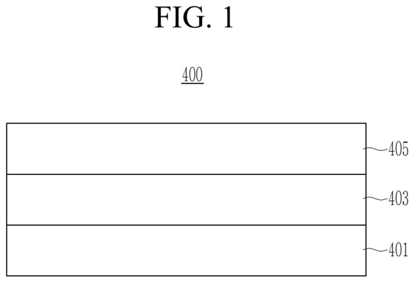

FIG. 1 schematically shows a structure of a negative electrode 400 according to one embodiment, and the negative electrode 400 includes a current collector 401, a first layer 403, and a second layer 405.

The negative electrode for an all solid-state battery according to one embodiment may be a deposition-type negative electrode. A deposition-type negative electrode is a negative electrode where lithium ions released from a positive electrode active material migrate toward the negative electrode during charging and discharging of a battery, resulting in lithium deposition onto the surface of the current collector. For example, a lithium deposition layer is formed between the current collector and the negative electrode coating layer due to the deposition of lithium ions, and the lithium deposition layer may serve as a negative electrode active material. Neither the oxide of a metal capable of alloying with lithium nor the carbon-based material acts as a negative electrode active material directly participating in the charging and discharging reaction. This refers to a negative electrode that includes no negative electrode active material during the battery assembly, but in which the lithium deposition layer serves as a negative electrode active material.

The first layer consists of an oxide of a metal capable of alloying with lithium and a first binder. The oxide of a metal capable of alloying with lithium may be ZnO, SnO₂(IV), SnO(II), Bi₂O₃, or a combination thereof.

The oxide of a metal capable of alloying with lithium irreversibly forms a metal and a lithium oxide, for example, Li₂O, upon reaction with lithium. Subsequently, the metal may additionally react with lithium, so that the formation and decomposition of an alloy phase of lithium and the metal may occur reversibly. If this reaction is represented by a reaction scheme using Zn as an example of the metal, it is as follows.

[Reaction Scheme 1] ZnO+2Li→Zn+2Li₂O

[Reaction Scheme 2] Zn+Li↔Li-Zn

In one embodiment, the oxide of a metal capable of alloying with lithium is positioned in a layer separate from the carbon-based material. For example, the oxide of a metal capable of alloying with lithium is included in the first layer positioned on the current collector, and the carbon-based material is included in the second layer positioned on the first layer.

Since the first layer positioned between the current collector and the second layer includes an oxide of a metal capable of alloying with lithium, lithium deposition may occur between the first layer and the second layer according to Reaction Scheme 1 during charging and discharging of the all solid-state battery, such that a lithium deposit may be formed therebetween. In addition, the reaction represented by Reaction Scheme 2 may occur, such that a lithium alloy phase may be formed between the first layer and the second layer.

Since this reaction occurs between the first layer, which is not in direct contact with the solid electrolyte and the second layer, direct contact between the lithium deposit and the solid electrolyte may be minimized, thereby preventing degradation of the solid electrolyte. In addition, lithium may be stably deposited due to Zn forming an alloy phase with lithium, since Li₂O does not directly electrochemically react with lithium, the structure of the second layer may be maintained without change.

If lithium metal generated at the interface between the second layer including amorphous carbon and the solid electrolyte moves toward the current collector through creep deformation along surfaces of carbon particles, the lithium alloy phase formed in the first layer may allow lithium to be uniformly deposited on the surface of the current collector in a pillar shape. Accordingly, a lithium deposition layer may be stably and uniformly formed on the current collector.

If an oxide of a metal capable of alloying with lithium is positioned together with a carbon-based material in a single layer, it is not suitable since the effect of preventing the lithium deposit from contacting the solid electrolyte may not be obtained. Furthermore, in this case, during the initial cycles, lithium may move through creep deformation due to the influence of the carbon-based material, such that the lithium deposit may be deposited between the first layer and the current collector; however, as the cycles subsequently proceed, pores of the carbon-based material may become blocked, such that the lithium deposit may be formed at the interface between the first layer and the second layer. Such a change in the deposition position is not suitable since it causes instability of the electrode.

In addition, if the negative electrode does not include the second layer including the carbon-based material, the first layer comes into direct contact with the solid electrolyte layer, and lithium deposition may occur at the interface between the first layer and the solid electrolyte layer. Herein, degradation of the solid electrolyte may be promoted due to the high reactivity of lithium and the solid electrolyte.

Furthermore, if the oxide of a metal capable of alloying with lithium is included in the second layer rather than the first layer contacting the current collector, it is not appropriate since the lithium deposit may come into direct contact with the solid electrolyte, thus degradation of the solid electrolyte may not be prevented.

The first layer consists only of the oxide of a metal capable of alloying with lithium and the first binder. In addition, the second layer consists only of the carbon-based material and the second binder. If the second layer includes a metal, such as Ag, that is generally used in a deposition-type negative electrode, alloying of lithium with the oxide of a metal capable of alloying with lithium included in the first layer may be inhibited, which is not desirable. Furthermore, as the cycles proceed, lithium deposition may occur between the second layer and the solid electrolyte layer, such that direct contact between lithium and the solid electrolyte may not be prevented.

In one embodiment, a thickness ratio of the first layer to the second layer may be 1:1 to 1:10, and may be 1:1 to 1:7 or 1:1 to 1:5. If the thickness ratio of the first layer and the second layer is included in the above range, the initial irreversible capacity may be minimized, and long-term battery life characteristics may be more effectively stabilized.

The thickness of the first layer may be 1 µm to 10 µm, and may be 1 µm to 5 µm, or 1 µm to 3 µm. In addition, the thickness of the second layer may be 1 µm to 10 µm, 2 µm to 7 µm, or 3 µm to 5 µm.

If the thickness ratio of the first layer to the second layer satisfies the above range and the thicknesses of the first layer and the second layer respectively satisfy the above ranges, initial irreversible capacity may be minimized, lithium may be deposited in a more stable morphology, and contact between the lithium and the solid electrolyte layer may be minimized.

In one embodiment, the amount of the metal capable of alloying with lithium included in the first layer may be 80 wt% to 99 wt%, and may be 85 wt% to 99 wt%, or 90 wt% to 99 wt%, based on 100 wt% of the first layer. If the amount of the metal capable of alloying with lithium is included in the above range, resistance caused by the first binder may be minimized, so that the alloy phase formation reaction between the metal and lithium may be more smoothly induced inside the first layer.

In one embodiment, the amount of the carbon-based material may be 80 wt% to 99 wt%, and may be 85 wt% to 99 wt%, or 90 wt% to 99 wt%, based on 100 wt% of the second layer. If the amount of the carbon-based material is included in the above range, resistance caused by the second binder may be minimized, and creep deformation of lithium metal may be more sufficiently induced, so that direct contact between the solid electrolyte and lithium may be minimized.

In one embodiment, the carbon-based material may be amorphous carbon.

The amorphous carbon may be, for example, carbon black, acetylene black, denka black, ketjen black, furnace black, activated carbon, graphene, or a combination thereof. The carbon black may be Super P (available from Timcal, Ltd.). The amorphous carbon is not limited thereto, and any material which may be classified as amorphous carbon in the field may be available.

In one embodiment, the amorphous carbon may be single particles or an agglomerated product that has a secondary particle form in which primary particles are agglomerated. If the amorphous carbon is single particles, the size of the amorphous carbon may have an average particle diameter of 100 nm or less, for example, a nanosize of 10 nm to 100 nm.

If the amorphous carbon is an agglomerated product, the particle diameter of the primary particle may be 20 nm to 100 nm and the particle diameter of the secondary particle may be 1 µm to 20 µm.

In one embodiment, the particle diameter of the primary particles may be 20 nm to, 100 nm, 20 nm to 90 nm, 20 nm to 80 nm, or 30 nm to 70 nm.

In one embodiment, the particle diameter of the secondary particle may be 1 µm to 20 µm, 2 µm to 15 µm, or 3 µm to 10 µm.

The shape of the primary particle may be spherical, oval, plate-shaped, or combinations thereof, and in one embodiment, the shape of the primary particle may be spherical, oval, or combinations thereof.

In one embodiment, the first binder and the second binder included in the first layer and the second layer, respectively, may be the same as or different from each other. The first binder and the second binder may be, for example, polyvinylidene fluoride, styrene butadiene rubber (SBR), polytetrafluoroethylene, polyethylene, vinylidene fluoride/hexafluoropropylene copolymer, polyacrylonitrile, polymethylmethacrylate, carboxymethyl cellulose, hydroxypropyl cellulose, diacetyl cellulose, or a combination thereof. The carboxymethyl cellulose, hydroxypropyl cellulose, or diacetyl cellulose may be an alkali metal salt thereof, and the alkali metal may be Na or Li. The first binder and the second binder are not limited thereto, and any binder used in the relevant technical field may be used.

The amount of the first binder may be included in an amount of 1 wt% to 20 wt%, 1 wt% to 15 wt%, or 1 wt% to 10 wt%, based on 100 wt% of the total first layer. In the above amount range, the first binder may sufficiently exhibit adhesive ability without deteriorating battery performances.

The amount of the second binder may be included in an amount of 1 wt% to 20 wt%, 1 wt% to 15 wt%, or 1 wt% to 10 wt% based on the total 100 wt% of the second layer. Within the above amount range, the second binder may sufficiently exhibit adhesive ability without deteriorating battery performance.

The current collector may be, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may have a foil shape or a sheet shape. A thickness of the negative electrode current collector may be 1 µm to 20 µm, 5 µm to 15 µm, or 7 µm to 10 µm.

The current collector may include the metal as a substrate and may further include a thin film on the substrate. The thin film may include an element being capable of forming an alloy with lithium, for example, gold, silver, zinc, tin, indium, silicon, aluminum, bismuth, or a combination thereof, but is not limited thereto and any elements known in the art as long as forming an alloy with lithium may be utilized. If the current collector further includes a thin film, the more flattened lithium-containing layer may be formed, if the lithium is deposited during charging to form the lithium-containing layer, thereby further improving the cycle-life characteristics of the all solid-state battery.

A thickness of the thin film may be 1 nm to 800 nm, 10 nm to 700 nm, 50 nm to 600 nm, or 100 nm to 500 nm. If the thickness of the thin film is within the range, the cycle-life characteristics may be further enhanced.

The negative electrode according to one embodiment may further include, between the current collector and the negative electrode coating layer, a lithium-containing layer that is formed during the initial charge after the battery preparation. The thickness of the lithium-containing layer may be 1 µm to 1000 µm, 1 µm to 500 µm, 1 µm to 200 µm, 1 µm to 150 µm, 1 µm to 100 µm, or 1 µm to 50 µm. If the thickness of the lithium-containing layer falls in the range, it may effectively perform the role of a lithium reservoir and the cycle-life characteristics may be further enhanced.

The lithium-containing layer may be formed after fabricating the battery during charging, as lithium ions are released from a positive electrode active material, pass through the solid electrolyte, and migrate toward the negative electrode, and thus, whereby lithium is precipitated and deposited on the negative electrode current collector.

The charging may be a formation process which may be carried out one to three times at 0.05 C to 1 C at about 25 °C to 50 °C. If lithium is precipitated and deposited to form the lithium-containing layer, lithium included in the lithium-containing layer is ionized during discharging and moves toward the positive electrode, and thus, this lithium may be used as a negative electrode active material.

### <All solid-state battery>

An all solid-state battery according to one embodiment includes the negative electrode, a positive electrode and a solid electrolyte layer positioned between the positive electrode and the negative electrode.

### <Solid electrolyte layer >

In one embodiment, the solid electrolyte layer may include a solid electrolyte. It may be inorganic solid electrolyte, such as sulfide-based solid electrolyte, an oxide-based solid electrolyte, a halide-based solid electrolyte, and the like, or it may be a solid polymer electrolyte. In one embodiment, the solid electrolyte may be the sulfide-based solid electrolyte. The sulfide-based solid electrolyte is suitable, since it may have superior ionic conductivity compared to other solid electrolytes, such as oxide-based solid electrolyte, and may exhibit excellent cycle-life characteristics in a wider operating range.

In one embodiment, the sulfide-based solid electrolyte may be Li₂S-P₂S₅, Li₂S-P₂S₅-LiX (where X is an halogen element, for example, I, or Cl), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S5-ZₘSₙ (where m and n are each integers of 0 or greater and 12 or less, and Z is one of Ge, Zn, or Ga), Li₂S-GeS₂, Li₂S-SiS₂-Li₃PO₄, Li₂S-SiS₂-LiₚMO_{q} (p and q are each integers of 0 or greater and 12 or less, and M is one of P, Si, Ge, B, Al, Ga or In), LiₐM_{b}P_{c}S_{d}Aₑ (where a, b, c, d, and e are each integers of 0 or greater and 12 or less, and M is Ge, Sn, Si, or a combination thereof, and A is one of F, Cl, Br, or I). The sulfide-based solid electrolyte may be, for example, Li₇₋ₓPS₆₋ₓFₓ (0≤x≤2), Li₇₋ₓPS₆₋ₓClₓ (0≤x≤2), Li₇₋ₓPS₆₋ₓBrₓ (0≤x≤2), or Li₇₋ₓPS₆₋ₓIₓ (0≤x≤2). Furthermore, specifically, it may be Li₃PS₄, Li₇P₃S₁₁, Li₇PS₆, Li₆PS₅Cl, Li₆PS₅Cl, Li₆PS₅I, Li₆PS₅Br, Li_{5.8}PS_{4.8}Cl_{1.2}, Li_{6.2}PS_{5.2}Br_{0.8}, or the like.

In one embodiment, the sulfide-based solid electrolyte may be an argyrodite-type sulfide-based solid electrolyte. The argyrodite-type sulfide-based solid electrolyte may be, for example, LiₐM_{b}P_{c}S_{d}Aₑ (where a, b, c, d, and e are each an integer of 0 or more and 12 or less, and M is Ge, Sn, Si, or a combination thereof, and A is F, Cl, Br, or I).

The specific examples may be Li₃PS₄, Li₇P₃S₁₁, Li₇PS₆, Li₆PS₅Cl, Li₆PS₅Br, Li_{5.8}PS_{4.8}Cl_{1.2}, Li_{6.2}PS_{5.2}Br_{0.8}, Li₆PS₅I, Li_{5.75}PS_{4.75}Cl_{1.25}, (Li5.69Cu0.06)PS4.75Cl1.25, (Li5.72Cu0.03)PS4.75Cl1.25, (Li5.69Cu0.06)P(S4.70(SO4)0.05)Cl1.25, (Li5.69Cu0.06)P(S4.60(SO4)0.15)Cl1.25, (Li5.72Cu0.03)P(S4.725(SO4)0.025)Cl1.25, (Li5.72Na0.03)P(S4.725(SO4)0.025)Cl1.25, Li_{5.75}P(S_{4.725}(SO₄)_{0.025})Cl_{1.25}, or a combination thereof, but it is not limited thereto. The solid electrolyte may be a β-phase or an α-phase. For example, it may be β-Li₃PS₄.

The sulfide-based solid electrolyte may be amorphous, crystalline, or a combination thereof. The sulfide-based solid electrolyte may be prepared, for example, by mixing Li₂S and P₂S₅ at a mole ratio of 50:50 to 90:10, or 50:50 to 80:20. In the range of the mixing ratio, the sulfide-based solid electrolyte exhibiting excellent ionic conductivity may be prepared. By additionally including other components such as SiS₂, GeS₂, B₂S₃, or the like, ionic conductivity may be further improved.

As a mixing method for sulfur-containing raw materials to prepare a sulfide-based solid electrolyte, mechanical milling or a solution method may be applied. Mechanical milling is a method in which starting raw materials and a ball mill or the like are placed into a reactor and vigorously agitated to pulverize the starting raw material into fine particles and mix them. The solution method may provide a solid electrolyte as a precipitate by mixing starting raw material in a solvent. Furthermore, if the heat-treating is carried out after mixing, the crystal of the solid electrolyte may become more robust and ionic conductivity may be improved. For example, a sulfide-based solid electrolyte may be prepared by mixing sulfur-containing raw materials and performing heat treatment twice or more, and in this case, a sulfide-based solid electrolyte having high ionic conductivity and being robust may be prepared.

The sulfide-based solid electrolyte may also be a commercial solid electrolyte.

The oxide-based solid electrolyte may be, for example, Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃ (PZT), Pb₁₋ₓLaₓZr_{1-y}Ti_{y}O₃ (PLZT) (0≤x<1, 0≤y<1), Pb(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate(Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanumtitanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, a Garnet-based ceramics Li₃₊ₓLa₃M₂O₁₂ (M= Te, Nb, or Zr, and x is an integer of 1 to 10), or a mixture thereof.

The solid polymer electrolyte may include at least one selected from, for example, polyethylene oxide, poly(diallyldimethylammonium)trifluoromethanesulfonyl imide (poly(diallyldimethylammonium)TFSI), Cu₃N, Li₃N, LiPON, Li₃PO_{4·}Li₂S_{·}SiS₂, Li₂S_{·}GeS_{2·}Ga₂S₃, Li₂O_{·}11Al₂O₃, Na₂O_{·}11Al₂O₃, (Na,Li)₁₊ₓTi₂₋ₓAlₓ(PO₄)₃ (0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-Silicates, Li_{0.3}La_{0.5}TiO₃, Na₅MSi₄O₁₂(M is a rare-earth element such as Nd, Gd, Dy, or the like) Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (0≤x≤0.8, 0≤y≤1.0, M is Nd, Sm, Eu, Gd, Tb, Dy, Ho, Er, Tm, or Yb), Li_{1+x+y}QₓTi₂₋ₓSi_{y}P_{3-y}O₁₂ (0<x≤ 0.4, 0<y≤0.6, Q is Al or Ga), Li₆BaLa₂Ta₂O₁₂, Li₇La₃Zr₂O₁₂, Li₅La₃Nb₂O₁₂, Li₅La₃M₂O₁₂ (M is Nb, Ta), or Li₇₊ₓAₓLa₃₋ₓZr₂O₁₂ (0<x<3, A is Zn).

The halide-based solid electrolyte may include a Li element, an M element (where M is a metal except for Li), and an X element (where X is a halogen). The X may be, for example, F, Cl, Br and I. In particular, the halide-based solid electrolyte may include at least one of Br and Cl, as the X. Furthermore, the M may be, for example, a metal element such as Sc, Y, B, Al, Ga, In, and the like.

The composition of the halide-based solid electrolyte is not limited, but the halide-based solid electrolyte may be represented by Li₆₋₃ₐMₐBr_{b}Cl_{c} (where, M is a metal, except for Li, 0<a<2, 0≤b≤6, 0≤c≤6, b+c=6). Herein, the a may be 0.75 or more, or 1 or more, and the a may be 1.5 or less. The b may be 1 or more, or 2 or more. Furthermore, the c may be 3 or more, or 4 or more. The exemplary of the halide-based solid electrolyte may be Li₃YBr₆, Li₃YCl₆, or Li₃YBr₂Cl₄.

The solid electrolyte may be in particle form. Herein, the average particle diameter (D50) of the solid electrolyte may be 5.0 µm or less, and for example, may be 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm.

The solid electrolyte layer may further include a binder. Herein, the binder may be styrene-butadiene rubber, polytetrafluoroethylene, polyvinylidene fluoride, polyethylene, an acrylate-based polymer, or a combination thereof, but the present disclosure is not limited thereto, and any material used as a binder in the relevant technical field may be used. The acrylate-based polymer may be butyl acrylate, polyacrylate, polymethacrylate, or a combination thereof.

The amount of the binder in the solid electrolyte layer may be appropriately adjusted, and it is not required to be limited.

The solid electrolyte layer may be prepared by putting a solid electrolyte into a mold and pressing it, or may be prepared by adding a solid electrolyte to a binder solution, coating it on a substrate film, and drying it. The binder solution may include isobutyryl isobutyrate, xylene, toluene, benzene, hexane, or a combination thereof, as a solvent. The pressing process may be performed by applying a pressure of 10 MPa to 500 MPa, or a pressure of 100 MPa to 400 MPa. Since the process for preparing the solid electrolyte layer is widely known in the relevant field, a detailed description thereof will be omitted in the present specification.

The thickness of the solid electrolyte layer may be, for example, 10 µm to 150 µm.

The solid electrolyte layer may further include an alkali metal salt, and/or an ionic liquid, and/or a conductive polymer.

The alkali metal salt may be, for example, a lithium salt. In the solid electrolyte layer, an amount of the lithium salt may be 1 M or more, for example, 1 M to 4 M. In this case, the lithium salt may improve the lithium ion mobility of the solid electrolyte layer, thereby improving ionic conductivity.

The lithium salt, may be, for example, LiSCN, LiN(CN)₂, Li(CF₃SO₂)₃C, LiC₄F₉SO₃, LiN(SO₂CF₂CF₃)₂, LiCl, LiF, LiBr, LiI, LiB(C₂O₄)₂, LiBF₄, LiBF₃(C₂F₅), lithium bis(oxalato) borate (LiBOB), lithium oxalyldifluoroborate (LIODFB), lithium difluoro(oxalato)borate (LiDFOB), lithium bis(trifluoro methanesulfonyl)imide (LiTFSI, LiN(SO₂CF₃)₂), lithium bis(fluorosulfonyl)imide(LiFSI, LiN(SO₂F)₂), LiCF₃SO₃, LiAsF₆, LiSbF₆, LiClO₄, or a mixture thereof.

Furthermore, the lithium salt may be imide-based, for example, the imide-based lithium salt may be lithium bis(trifluoro methanesulfonyl)imide (LiTFSI, LiN(SO₂CF₃)₂), or lithium bis(fluorosulfonyl)imide (LiFSI, LiN(SO₂F)₂). The lithium salt may suitably maintain the chemical reactivity with the ionic liquid, and thus, the ionic conductivity may be maintained or improved.

The ionic liquid refers to a salt composed solely of ions, having a melting point at or below room temperature and being in a liquid state at room temperature, or to a room-temperature molten salt.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, or mixtures thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, or (CF₃SO₂)₂N⁻.

The ionic liquid may be, for example, at least one selected from N-methyl-N-propylpyrrolidinium bis(trifluoromethanesulfonyl)imide, N-butyl-N-methylpyrrolidinium bis (3-trifluoromethylsulfonyl)imide, 1-butyl-3-methylimidazolium bis(trifluoromethylsulfonyl)amide, or 1-ethyl-3-methylimidazolium bis(trifluoromethylsulfonyl)amide.

In the solid electrolyte layer, the weight ratio between the solid electrolyte and the ionic liquid may range from 0.1:99.9 to 90:10, for example, from 10:90 to 90:10, from 20:80 to 90:10, from 30:70 to 90:10, from 40:60 to 90:10, or from 50:50 to 90:10. The solid electrolyte layer within the range may have an improved electrochemical contact area to the electrode, and thus, the ionic conductivity may be maintained or improved. Accordingly, the energy density, discharge capacity, rate capability, or the like of the all-solid-state rechargeable battery may be improved.

### <Positive electrode >

The positive electrode for the all-solid-state battery according to one embodiment includes a positive electrode current collector and a positive electrode active material layer on one surface of the positive electrode current collector.

The positive electrode active material layer may include a positive electrode active material. The positive electrode active material may be a positive electrode active material that may reversibly intercalate and deintercalate lithium ions. For example, the positive electrode active material may include one or more composite oxides of a metal selected from cobalt, manganese, nickel, and a combination thereof, and lithium. The examples of the positive electrode active material may be LiₐA_{1-b}B¹_{b}D¹₂ (0.90≤a≤1.8, 0≤b≤0.5); LiₐE_{1-b}B¹_{b}O_{2-c}D¹_{c} (0.90≤a≤1.8, 0 ≤b≤0.5, 0≤c≤0.5); LiₐE_{2-b}B¹_{b}O_{4-c}D¹_{c} (0.90≤a≤1.8, 0≤b≤0.5, 0≤c≤05); LiₐNi_{1-b-c}Co_{b}B¹_{c}D¹_{α} (0.90≤a≤1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃ (0≤f≤2); Li_{(3-f)}Fe₂(PO₄)₃ (0≤f≤2); or LiFePO₄.

In the chemical formulas A is selected from Ni, Co, Mn, or a combination thereof; B¹ is selected from Al, Ni, Co, Mn, Cr, Fe, Mg, Sr, V, a rare earth element, or a combination thereof; D¹ is selected from O, F, S, P, or combination thereof; E is selected from Co, Mn, or combination thereof; F¹ is selected from F, S, P, or a combination thereof; G is selected from Al, Cr, Mn, Fe, Mg, La, Ce, Sr, V, or a combination thereof; Q is selected from Ti, Mo, Mn, or a combination thereof; I¹ is selected from Cr, V, Fe, Sc, Y, or a combination thereof; J is selected from V, Cr, Mn, Co, Ni, Cu, or a combination thereof; L¹ is selected from Mn, Al, or a combination thereof.

According to one embodiment, the positive electrode active material may be a ternary lithium transition metal oxide such as LiNiₓCo_{y}Al_{z}O₂(NCA), LiNiₓCo_{y}Mn_{z}O₂(NCM) (wherein, 0<x<1, 0<y<1, 0<z<1, x+y+z=1), or the like.

The compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxy carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or mixtures thereof. The coating layer may be formed by any coating method, for example, spray coating, dip coating, or the like, as long as the elements are applied to the compound in a manner that does not adversely affect the properties of the positive electrode active material, and a detailed description thereof is not illustrated since such methods will be readily understood by those of ordinary skill in the art.

Furthermore, the coating layer may be any coating materials which are known as a coating layer for the positive electrode active material of the all-solid-state battery. For example, it may be a buffer layer which serves to reduce an interface resistance between the positive electrode active material and the solid electrolyte. For example, the buffer layer may include lithium-metal-oxide and this metal may be one or more elements selected from Al, B, Ca, Ce, Cr, Fe, Mg, Mo, Nb, Si, Sn, Sr, Ta, V, W, or Zr. The specific examples of the buffer layer may be Li₂O-ZrO₂(LZO), LiNbO₂, or the like.

In addition, if the positive electrode active material is ternary material including nickel, cobalt, and manganese, or nickel, cobalt, and aluminum, the capacity density of the all-solid-state battery may be further improved, and metal dissolution from the positive electrode active material in a charged state may be further reduced. As a result, the long-term reliability and cycle characteristics of the all-solid-state battery in a charged state may be further improved.

The average particle diameter of the positive electrode active material may be 1 µm to 25 µm, for example, 3 µm to 25 µm, 1 µm to 20 µm, 1 µm to 18 µm, 3 µm to 15 µm, or 5 µm to 15 µm. For example, the positive electrode active material may include small particles with an average particle diameter D50 of 1 µm to 9 µm and large particles with an average particle diameter D50 of 10 µm to 25 µm. The positive electrode active material with such a particle diameter range may be harmoniously mixed with other components in the positive electrode active material layer and may achieve high capacity and high energy density.

The positive electrode active material may be secondary particles where a plurality of primary particles is agglomerated, or monocrystalline (single crystal). Furthermore, the shape of the positive electrode active material may be, a spherical shape, a shape close to spherical, or a polyhedron shape, or irregular shape.

In the positive electrode active material layer, an amount of the positive electrode active material is not limited, and may be in any range which may be applied to a positive electrode layer of the conventional rechargeable all-solid-state battery. For example, based on the total 100 wt% of the positive electrode active material layer, the positive electrode active material may be included at 55 wt% to 99.5 wt%, for example, 65 wt% to 95 wt%, or 75 wt% to 91 wt%.

The positive electrode active material layer may further include a binder and/or a conductive material.

The binder may be polyvinyl alcohol, carboxymethyl cellulose, hydroxypropyl cellulose, diacetyl cellulose, polyvinylchloride, carboxylated polyvinylchloride, polyvinyl fluoride, polyethylene oxide, polyvinyl pyrrolidone, polyurethane, polytetrafluoroethylene, polyvinylidene fluoride, polyvinylidene fluoride-hexafluoropropylene, polyethylene, polypropylene, a styrene-butadiene rubber, an acrylated styrene-butadiene rubber, an epoxy resin, nylon, or the like, but is not limited thereto.

The binder may be included in an amount of 0.1 wt% to 5 wt%, or 0.1 wt% to 3 wt% based on the total 100 wt% of the positive electrode active material layer. Within the range of amount, the binder may exhibit sufficient adhesion ability without deteriorating the battery performance.

The conductive material is included to impart conductivity to the electrode, and any material having electronic conductivity may be used without causing a chemical change in the battery. Examples of the conductive material may include a carbon-based material such as natural graphite, artificial graphite, carbon black, acetylene black, ketjen black, carbon fiber, carbon nanofiber, carbon nanotubes or the like; a metal-based material of a metal powder or a metal fiber including; copper, nickel, aluminum, silver, or the like; a conductive polymer such as polyphenylene derivatives; or mixtures thereof.

The conductive material may be included in an amount of 0.1 wt% to 5 wt%, or 0.1 wt% to 3 wt% based on the total 100 wt% of the positive electrode active material layer. The conductive material in the above amount range may improve the electrical conductivity without deteriorating battery performance.

The positive electrode active material layer may further include a solid electrolyte. The solid electrolyte included in the positive electrode active material layer may be an inorganic solid electrolyte such as a sulfide-based solid electrolyte, an oxide-based solid electrolyte, a halide-based solid electrolyte, or the like, or solid polymer electrolyte. The solid electrolyte is the same as described in the aforementioned solid electrolyte, and may be the same as or different from the solid electrolyte included in the solid electrolyte layer.

Based on the total weight of the positive electrode active material layer, the solid electrolyte may be included at an amount of 0.1 wt% to 35 wt%, for example, 1 wt% to 35 wt%, 5 wt% to 30 wt%, 8 wt% to 25 wt%, or 10 wt% to 20 wt%. If the solid electrolyte with the amount of the above range is included in the positive electrode, the efficiency and cycle-life characteristic of the all-solid-state battery may be improved, without deterioration of capacity.

The positive current collector includes, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in foil or sheet form.

### <Elastic layer>

The all-solid-state battery according to one embodiment may further include an elastic layer which may buffer changes in thickness generated during charging and discharging. The elastic layer may be positioned between the negative electrode and a case.

The elastic layer may include a material having an elastic recovery rate of 50 % or more and insulating properties, and specifically, may include silicone rubber, acrylic rubber, fluorinated rubber, nylon, synthetic rubber, or a combination thereof. The buffer material may be present in a form of a polymer sheet.

### < Fabrication of all-solid-state battery >

The all solid-state battery according to one embodiment may be fabricated by the following process.

A first layer composition is prepared by adding an oxide of a metal capable of alloying with lithium and a first binder to a first solvent. In addition, a second layer composition is prepared by adding a carbon-based material and a second binder to a second solvent.

The first solvent may be N-methyl pyrrolidone, octyl acetate, isobutyl isobutyrate, toluene, xylene, water, or a combination thereof, and the second solvent may be N-methyl pyrrolidone, octyl acetate, isobutyl isobutyrate, toluene, xylene, water, or a combination thereof.

A first structure including a first layer is formed by coating the first layer composition to a first substrate and drying it. A second structure including a second layer is formed by coating the second layer composition to a second substrate and drying it. The second substrate may be stainless steel, but is not limited thereto. The first substrate may be a current collector.

The coating process may be performed by spray coating, slurry casting, or sputter coating. According to this coating process, the thicknesses of the first layer and the second layer may be adjusted, and for example, the process may be performed such that the thickness ratio of the first layer to the second layer is in the range of 1:10 to 1:3.

The second structure is positioned such that the second layer is in contact with one surface of the solid electrolyte layer, and after a primary pressing, the second substrate is removed to transfer the second layer to the solid electrolyte layer. The primary pressing process may be performed at 1 MPa to 500 MPa, 10 MPa to 400 MPa, or 100 MPa to 400 MPa.

Subsequently, the first structure is positioned such that the first layer is in contact with the second layer, and secondary pressing is performed to form the first layer on the second layer. The secondary pressing process may be performed at 1 MPa to 500 MPa, 10 MPa to 400 MPa, or 100 MPa to 400 MPa. However, the secondary pressing process may be performed under a lower pressure than the primary pressing process,

Through the above process, a negative electrode including the second layer, the first layer, and the current collector may be formed on the solid electrolyte layer.

Subsequently, a positive electrode is positioned on a surface opposite to a surface of the solid electrolyte layer in contact with the second layer to prepare a laminate. An all-solid-state battery is fabricated by pressing the laminate.

The pressing process may be performed at a temperature in a range of 25°C to 90°C. In addition, the pressing process may be performed by pressing at a pressure of 550 MPa or less, for example, 500 MPa or less, or for example, in a range of 1 MPa to 500 MPa. The pressing time may vary depending on the temperature and pressure, and may be, for example, less than 30 minutes. The pressing process may be, for example, an isostatic press, a roll press, a plate press, or a warm isostatic press.

The all solid-state secondary battery may be a unit battery including a structure of the positive electrode/ the solid electrolyte layer/the negative electrode, a bicell including a structure of the positive electrode/the solid electrolyte layer/the negative electrode/the solid electrolyte layer/ the positive electrode, or a stacked battery where the unit batteries are repeated.

The shapes of the all-solid-state rechargeable battery are not limited, but, for example, a coin-type, a button-type, a sheet-type, a laminate-type, a cylindrical-type, or a flat-type, or the like. Furthermore, the all-solid-state rechargeable battery may be applied to large-sized batteries used in electric vehicles or the like. For example, the all-solid-state rechargeable battery may be also used in hybrid vehicles such as a plug-in hybrid electric vehicle (PHEV), or the like. Furthermore, the all-solid-state rechargeable battery may be utilized in various applications requiring large-capacity energy storage, and for example, may be applied to electric bicycles or power tools. Furthermore, the all-solid-state rechargeable battery may be used in various fields such as portable electronic devices.

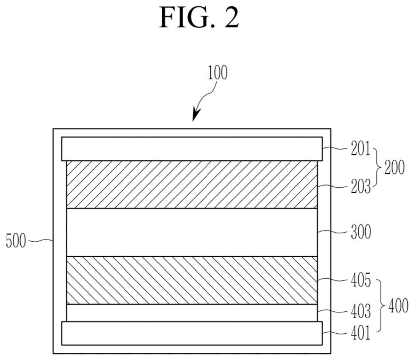

FIG. 2 is a cross-sectional view showing the all solid-state battery according to one embodiment. Referring to FIG. 2, the all solid-state battery 100 may have a structure in which an electrode assembly in which a negative electrode 400 including a negative electrode current collector 401, the first layer 403, and the second layer 405, a solid electrolyte layer 300, and a positive electrode 200 including a positive electrode active material layer 203 and a positive electrode current collector 201, are stacked, and the stacked assembly may be housed in a case such as a pouch, or the like. The all solid-state battery 100 may further include an elastic layer 500 positioned on the outside of at least one of the positive electrode 200 and the negative electrode 400.

FIG. 2 shows one electrode assembly including a negative electrode 400, a solid electrolyte layer 300, and a positive electrode 200, but an all-solid-state battery may also be fabricated by stacking at least two electrode assemblies. For example, the electrode assemblies may be stacked in numbers such as 2 to 100, 3 to 50, or 4 to 20, and so on.

### MODE FOR PERFORMING THE INVENTION

Hereinafter, examples of the present invention and comparative examples are described. These examples, however, are not in any sense to be interpreted as limiting the scope of the invention.

### (Example 1)

90 mg of β-Li₃PS₄ (available from NEI corporation) was put into a mold having an inner diameter of 10 mm and pressed at 200 MPa to prepare a solid electrolyte layer having a thickness of 100 µm.

A first layer composition was prepared by mixing ZnO (average particle diameter: 500 nm) and polyvinylidene fluoride at a weight ratio of 9:1 in an N-methyl pyrrolidone solvent.

The first layer composition was applied to the stainless steel by a slurry casting method and dried to prepare a first structure in which a first layer having a thickness of 1 µm was formed.

A second layer composition was prepared by mixing carbon black (SC65, available from MTI) and polyvinylidene fluoride at a weight ratio of 9:1 in an N-methyl pyrrolidone solvent.

The second layer composition was applied to a stainless steel current collector by a slurry casting method and dried to prepare a second structure in which a second layer having a thickness of 3 µm was formed.

The first structure was positioned such that the first layer was in contact with the solid electrolyte layer, followed by pressing at 300 MPa, and then the stainless steel was removed to transfer the first layer to the solid electrolyte layer. The second structure was positioned such that the second layer was in contact with the first layer, followed by pressing at 380 MPa to prepare a negative electrode including the first layer, the second layer, and the current collector.

Subsequently, a lithium metal foil (thickness: 400 µm, available from Honjo) was positioned on a surface of the solid electrolyte layer opposite to a surface on which the negative electrode was prepared, and then pressurized at 5 MPa to fabricate a half-cell. In the fabricated all solid-state half-cell, the thickness of the first layer was 1 µm, the thickness of the second layer was 3 µm, and thus the thickness ratio of the first layer to the second layer was 1:3.

### (Example 2)

A half-cell was fabricated in the same manner as in Example 1, except that a negative electrode was prepared by changing the thickness of the first layer to 3 µm, such that the thickness ratio of the first layer to the second layer was 1:1.

### (Example 3)

A half-cell was fabricated in the same manner as in Example 1, except that SnO(II) was utilized instead of ZnO.

### (Example 4)

A half-cell was fabricated in the same manner as in Example 3, except that a negative electrode was prepared in which the thickness of the first layer was changed to 3 µm, such that the thickness ratio of the first layer to the second layer was 1:1.

### (Comparative Example 1)

A carbon layer composition was prepared by mixing carbon black (SC65, available from MTI) and polyvinylidene fluoride at a weight ratio of 9:1 in an N-methyl pyrrolidone solvent.

The carbon layer composition was applied to a stainless steel current collector by a slurry casting method and dried to prepare a structure in which a carbon layer having a thickness of 3 µm was formed.

The structure was positioned such that the carbon layer was in contact with the solid electrolyte layer of Example 1, and then pressed at 300 MPa to prepare the negative electrode including the carbon layer and the current collector on the solid electrolyte layer.

Subsequently, a lithium metal foil (thickness: 400 µm, available from Honjo) was positioned on a surface of the solid electrolyte layer opposite to a surface on which the negative electrode was formed, and then the resulting assembly was pressed at 5 MPa to fabricate a half-cell. In the fabricated all solid-state half-cell, the thickness of the carbon layer was 3 µm.

### (Comparative Example 2)

A ZnO layer composition was prepared by mixing ZnO (average particle diameter: 500 nm) and polyvinylidene fluoride at a weight ratio of 9:1 in an N-methyl pyrrolidone solvent.

The ZnO layer composition was applied to a stainless steel current collector by a slurry casting method and dried to prepare a structure in which a ZnO layer having a thickness of 1 µm was formed.

The assembly was positioned such that the ZnO layer was in contact with the solid electrolyte layer of Example 1, and then the structure was pressed at 300 MPa to prepare a negative electrode including the ZnO layer and the current collector on the solid electrolyte layer.

Subsequently, a lithium metal foil (thickness: 400 µm, available from Honjo) was positioned on a surface of the solid electrolyte layer opposite to a surface on which the negative electrode was formed, and then pressed at 5 MPa to fabricate a half-cell. In the fabricated all solid-state half-cell, the thickness of the carbon layer was 3 µm.

### (Comparative Example 3)

A first layer composition was prepared by mixing ZnO (average particle diameter: 500 nm), carbon black (SC65, available from MTI), and polyvinylidene fluoride at a weight ratio of 3:9:1 in an N-methyl pyrrolidone solvent.

The first layer composition was applied to stainless steel by a slurry casting method and dried to prepare a first structure in which a first layer having a thickness of 4 µm was formed.

The first structure was positioned such that the first layer was in contact with the solid electrolyte layer of Example 1, and after pressing at 300 MPa, the stainless steel was removed to transfer the first layer to the solid electrolyte layer, thereby preparing a negative electrode including the first layer and the current collector on the solid electrolyte layer.

Subsequently, a lithium metal foil (thickness: 400 µm, available from Honjo) was positioned on a surface of the solid electrolyte layer opposite to a surface on which the negative electrode was formed, and then pressed at 5 MPa to fabricate a half-cell. In the fabricated all solid-state half-cell, the thickness of the first layer was 4 µm..

### Experimental Example 1) Evaluation of SEM

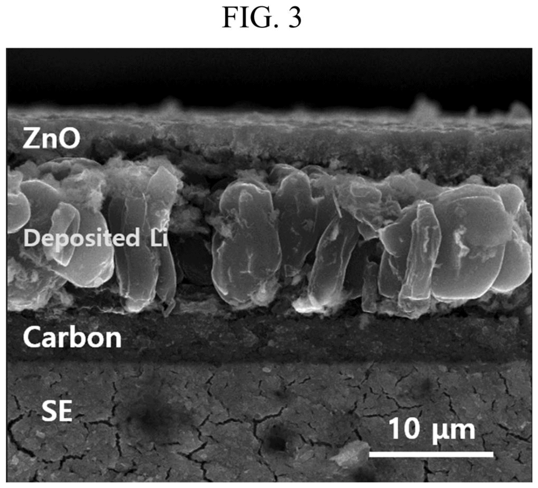

Cross-sectional SEM images of the negative electrodes and the solid electrolyte layers of Example 1 and Comparative Examples 1 and 2 are shown in FIGS. 3, 4, and 5, respectively. In FIGS. 3 to 5, SE represents a solid electrolyte layer, carbon represents a layer where carbon black is positioned, and ZnO represents a layer where ZnO is positioned.

As shown in FIG. 3, in Example 1, lithium deposition in a pillar shape between the second layer and the first layer may be confirmed.

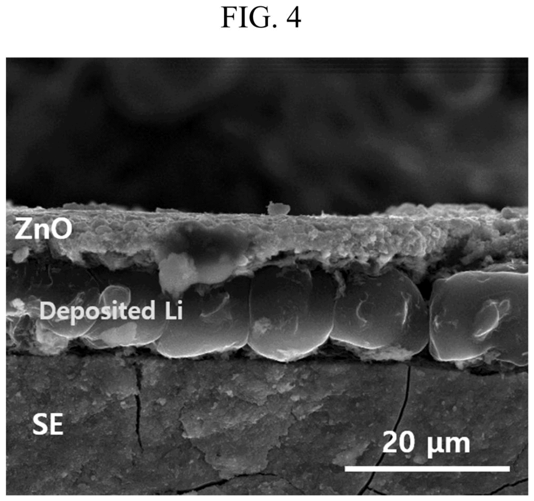

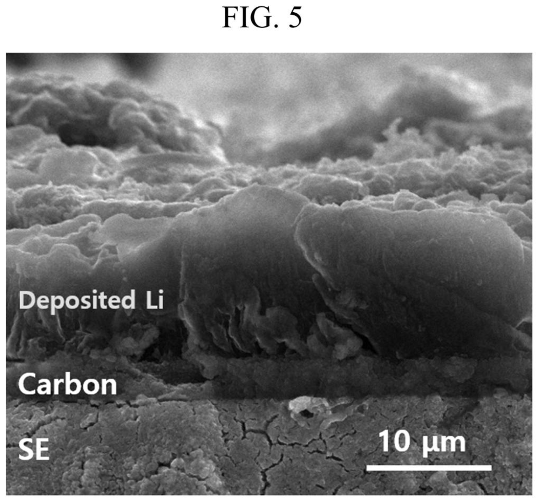

As shown in FIG. 4, in Comparative Example 1, lithium was deposited on the current collector in an undulating shape, and as shown in FIG. 5, in Comparative Example 2, although lithium was deposited in a pillar shape, the lithium deposition occurred at an interface in contact with the solid electrolyte.

### Experimental Example 2) Evaluation of Coulombic efficiency

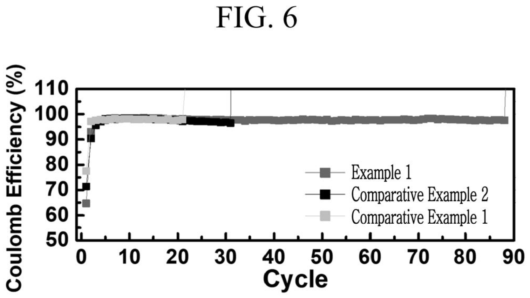

The half cells fabricated according to Example 1 and Comparative Examples 1 and 2 were subjected to 90 cycles of charging and discharging at 60°C under conditions of a current density of 0.5 mA/cm², a capacity of 2 mAh/cm², and a rate of 0.25 C. The ratio of the charging capacity to the discharging capacity in each cycle was calculated. The results are shown in FIG. 6 as @lombic efficiency.

As shown in FIG. 6, Example 1 exhibited a Coulombic efficiency of about 95% even when 90 cycles of charging and discharging were performed, whereas a short circuit occurred at about 22 cycles in Comparative Example 1 and at about 32 cycles in Comparative Example 2, such that subsequent charging and discharging could not be performed.

While this invention has been described in connection with what is presently considered to be practical example embodiments, it is to be understood that the invention is not limited to the disclosed embodiments. On the contrary, it is intended to cover various modifications and equivalent arrangements included within the spirit and scope of the appended claim.

## Claims

1. A negative electrode for an all solid-state battery, comprising:
a current collector;
a first layer which is positioned on the current collector and is composed of an oxide of a metal capable of alloyed with lithium and a first binder; and
a second layer which is positioned on the first layer and is composed of a carbon-based material and a second binder

2. The negative electrode for an all solid-state battery as claimed in claim 1, wherein the oxide of a metal capable of alloying with lithium is ZnO, SnO₂(IV), SnO(II), Bi₂O₃, or a combination thereof.

3. The negative electrode for an all solid-state battery as claimed in claim 1, wherein a thickness ratio of the first layer to the second layer is 1:1 to 1:10.

4. The negative electrode for an all solid-state battery as claimed in claim 1, wherein a thickness ratio of the first layer to the second layer is 1:1 to 1:7.

5. The negative electrode for an all solid-state battery as claimed in claim 1, wherein the first layer has a thickness of 1 µm to 10 µm.

6. The negative electrode for an all solid-state battery as claimed in claim 1, wherein the first layer has a thickness of 1 µm to 5 µm.

7. The negative electrode for an all solid-state battery as claimed in claim 1, wherein the second layer has a thickness of 1 µm to 10 µm.

8. The negative electrode for an all solid-state battery as claimed in claim 1, wherein the second layer has a thickness of 2 µm to 7 µm.

9. The negative electrode for an all solid-state battery as claimed in claim 1, wherein the carbon-based material is amorphous carbon.

10. The negative electrode for an all solid-state battery as claimed in claim 9, wherein the amorphous carbon is carbon black, acetylene black, denka black, ketjen black, furnace black, activated carbon, graphene, or a combination thereof.

11. The negative electrode for an all solid-state battery as claimed in claim 1, wherein the first binder and the second binder are polyvinylidene fluoride, styrene butadiene rubber (SBR), polytetrafluoroethylene, polyethylene, vinylidene fluoride/hexafluoropropylene copolymer, polyacrylonitrile, polymethylmethacrylate, carboxymethyl cellulose, hydroxypropyl cellulose, diacetyl cellulose, or a combination thereof.

12. The negative electrode for an all solid-state battery as claimed in claim 1, wherein an amount of the oxide of the metal capable of alloying with lithium is 80 wt% to 99 wt% based on 100 wt% of the first layer.

13. The negative electrode for an all solid-state battery as claimed in claim 1, wherein an amount of the first binder is 1 wt% to 20 wt% based on 100 wt% of the total first layer.

14. The negative electrode for an all solid-state battery as claimed in claim 1, wherein an amount of the carbon-based material is 80 wt% to 99 wt% based on 100 wt% of the second layer.

15. The negative electrode for an all solid-state battery as claimed in claim 1, wherein an amount of the second binder is 1 wt% to 20 wt% based on the total 100 wt% of the second layer.

16. The negative electrode for an all solid-state battery as claimed in claim 1, wherein the current collector is, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

17. An all solid-state battery, comprising:
a negative electrode of any one of claim 1 to claim 16;
a positive electrode; and
a solid electrolyte layer positioned between the positive electrode and the negative electrode.
